# EUROPÄISCHE PATENTSCHRIFT

(11) **EP 3 468 765 B1**
(45) Veröffentlichungstag und Bekanntmachung des Hinweises auf die Patenterteilung: **16.06.2021**
(21) Anmeldenummer: 17715075.2
(22) Anmeldetag: 28.03.2017
(51) Int. Cl.: B29C 45/26, B29C 45/36, B29C 45/40, B29C 33/30, B29C 45/80

(54) **SPRITZGUSSWERKZEUG MIT JUSTIERBARER KERNZENTRIERUNGSEINRICHTUNG**
INJECTION MOULD WITH ADJUSTABLE CORE CENTERING DEVICE
MOULE D'INJECTION AVEC DISPOSITIF DE CENTRAGE AJUSTABLE D'UN NOYAU DE MOULE

(30) Priorität: 13.06.2016 CH 7502016
(43) Veröffentlichungstag der Anmeldung: 17.04.2019
(73) Patentinhaber: Fostag Formenbau AG, 8260 Stein am Rhein (CH)
(72) Erfinder: MÜHLEMANN, Rolf, 8255 Schlattingen (CH)
(74) Vertreter: Keller Schneider Patent- und Markenanwälte AG (Zürich)
(86) Internationale Anmeldenummer: PCT/EP2017/057270
(87) Internationale Veröffentlichungsnummer: WO 2017/215801

(56) Entgegenhaltungen:
- WO-A1-2010/017622
- WO-A1-2012/055037
- CN-Y- 2 403 567
- DE-A1- 3 140 711
- DE-U1- 8 714 821
- JP-A- S5 120 258
- JP-U- H0 588 925
- US-A- 4 556 377

## Beschreibung

### Technisches Gebiet

Die Erfindung betrifft ein Spritzgusswerkzeug mit mindestens einer Kavität zur Herstellung von dünnwandigen, behälterartigen Spritzgusserzeugnissen, insbesondere Becher, Tuben, Tubenköpfe, Röhrchen, Flaschenrohlingen oder Spritzen, umfassend eine Matrizenhalteplatte, welche mindestens eine kavitätsbildende Matrize aufweist; eine Kernhalteplatte, welche mindestens eine Kerneinheit mit kavitätsbildendem Kern aufweist; mindestens einen Abstreifring zum Abstreifen des Spritzgusserzeugnisses vom mindestens einen Kern, wobei der mindestens eine Abstreifring zwischen Kernhalteplatte und Matrizenhalteplatte angeordnet ist; und mindestens eine justierbare Kernzentrierungseinrichtung zur Feinausrichtung des mindestens einen Kerns gegenüber der mindestens einen Matrize.

### Technischer Hintergrund

Bei der Herstellung von dünnwandigen, behälterartigen Spritzgusserzeugnissen, insbesondere insbesondere Becher, Tuben, Tubenköpfe, Röhrchen, Flaschenrohlingen oder Spritzen, ist eine gleichmässige Wandstärke von grosser Bedeutung, da bereits kleine Abweichungen in der Wandstärke beim Abkühlen und Entformen des Behälters wegen auftretenden Volumenschwindung zu starken Verformungen des Behälters führen können.

Die Kavitäten für solche Spritzgusserzeugnisse werden immer durch eine Matrize und einen darin angeordneten Kern ausgebildet. Um eine gleichmässige Wandstärke zu erhalten, muss also die Position des Kerns in einer Trennebene senkrecht zur Schliessrichtung des Werkzeugs, derart ausgerichtet sein, dass er mit der kavitätsbildenden Matrize zentriert ist. Bei mehr-kavitäten Werkzeuge ist dabei jeder Kern separat zentriert. Eine separate Zentrierung der Kerne in den jeweiligen Matrize ist wichtig, um mit allen Kavitäten Spritzgusserzeugnisse mit gleichmässigen Wandstärken zu erhalten.

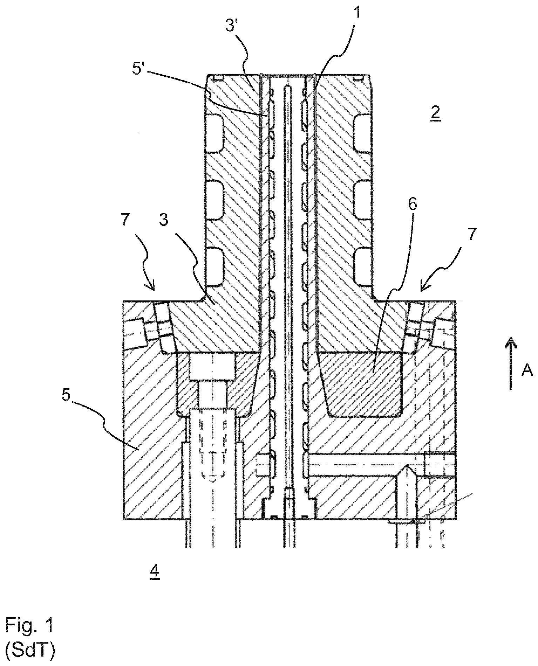

Bekannte Spritzgusswerkzeuge für solche dünnwandigen, behälterartigen Spritzgusserzeugnisse, wie beispielsweise das in Fig. 1 dargestellte Spritzgusswerkzeug, umfassen eine Matrizenhalteplatte, in welcher mindesten eine kavitätsbildende Matrizeneinheit resp. Matrize fest gehalten ist, eine Kernhalteplatte auf welcher mindestens ein kavitätsbildende Kerneinheit resp. ein Kern gehalten ist, und einen Abstreifring, welcher formschlüssig in einer Aussparung der Kerneinheit angeordnet ist und entgegen die Schliessrichtung bewegbar ist, um das fertige Spritzgusserzeugnis nach dem Öffnen des Werkzeuges vom Kern abzustreifen. Der Kern resp. die Kerneinheit ist zur Einstellung der Zentrierung schwimmend auf der Kernhalteplatte gelagert und ist bei erfolgter, korrekter Zentrierung über Befestigungsmittel auf der Kernhalteplatte in seiner Position fixiert.

Zur Feinzentrierung des Kerns gegenüber der Matrize ist eine Kernzentrierungseinrichtung zwischen Matrizeneinheit und Kerneinheit angeordnet. Die Kernzentrierungseinrichtung umfasst mehreren - meist vier - Zentrierleisten, die eine gegenüber der Schliessrichtung des Spritzgusswerkzeugs geneigt Zentrierfläche aufweisen und auf einer entsprechend geneigten Auflagefläche der Kerneinheit abgestützt sind. Durch Hinzufügen oder Entfernen von Justierfolien bei den Zentrierleisten kann der Kern exakt in der zugehörigen Matrize zentriert werden. Jede Zentrierleiste bildet also eine Zentrierfläche an der Kerneinheit aus, welche mit einer Zentrierfläche an der Matrizeneinheit korrespondiert. Sobald Kern und Matrize zueinander zentriert sind, wird die Kerneinheit an der Kernhalteplatte fixiert und das Werkzeug ist bereit für die Herstellung der Spritzgusserzeugnisse. Bei mehreren Kerneinheiten sind zur individuellen Zentrierung der einzelnen Einheiten Luftspalte zwischen benachbarten Kerneinheiten vorhanden.

Nachteilig an dem bekannte Aufbau ist, dass Abstreifring und insbesondere der den Abstreifring umgebenden Bereich der Kerneinheit mit der Kernzentrierungseinrichtung genügend gross und stark dimensioniert sein muss, um grossen Schliesskräfte von 1000 kN oder mehr standzuhalten. Dies führt dazu, dass der Durchmesser der Kerneinheiten wesentlich grösser als der Durchmesser der Kavität ist, was sich direkt auf die maximale Anzahl von Kavitäten pro Werkzeug auswirkt.

Ein weiterer Nachteil besteht darin, dass beim erstmaligen Justieren oder beim Nachjustieren die Kernzentrierungseinrichtungen schlecht zugänglich sind und das Spritzgusswerkzeug teilweise auseinandergebaut werden muss.

Die WO 2010/017622 A1 offenbart ein Spritzgusswerkzeug mit mindestens einer Kavität in einer Matrizenhalteplatte, einer Kernhalteplatte, welche eine Kerneinheit mit kavitätsbildenden Kern aufweist, einen Abstreifring zum Abstreifen des Spritzgusserzeugnisses vom mindestens einen Kern, wobei der mindestens eine Abstreifring zwischen Kernhalteplatte und Matrizenhalteplatte angeordnet ist und einem Abstreifring, der bei geöffnetem Werkzeug schwimmend in einer Abstreifplatte gelagert ist. Die CN 2 403 567 Y, DE 31 40 711 A1 und JP S51 20258 A offenbaren Spritzgusswerkzeuge mit mindestens einer Kavität und mindestens einer justierbaren Kernzentrierungseinrichtung.

### Darstellung der Erfindung

Eine Aufgabe der Erfindung ist es, ein Spritzgusswerkzeug zur Herstellung von dünnwandigen, behälterartigen Spritzgusserzeugnissen, insbesondere Becher, Tuben, Tubenköpfe, Röhrchen, Flaschenrohlingen oder Spritzen, anzugeben, bei welchem die Zentrierung einfacher zu justieren ist und welches eine grössere Anzahl Kavitäten pro Flächeneinheit erlaubt.

Diese Aufgabe wird durch ein Spritzgusswerkzeug mit den Merkmalen des Anspruchs 1 gelöst. Das Spritzgusswerkzeug mit mindestens einer Kavität zur Herstellung von dünnwandigen, behälterartigen Spritzgusserzeugnissen, insbesondere Becher, Tuben, Tubenköpfe, Röhrchen, Flaschenrohlingen oder Spritzen, umfasst eine Matrizenhalteplatte, welche mindestens eine kavitätsbildende Matrize resp. Matrizeneinheit aufweist; eine Kernhalteplatte, welche mindestens eine Kerneinheit mit kavitätsbildendem Kern aufweist; mindestens einen Abstreifring zum Abstreifen des Spritzgusserzeugnisses vom mindestens einen Kern, wobei der mindestens eine Abstreifring zwischen Kernhalteplatte und Matrizenhalteplatte angeordnet ist; und mindestens eine justierbare Kernzentrierungseinrichtung zur exakten Ausrichtung des mindestens einen Kerns in der mindestens einen Matrize. Der Abstreifring ist schwimmend in einer Abstreifplatte gehalten, welche zwischen Matrizenhalteplatte und Kernhalteplatte angeordnet ist. Die mindestens eine justierbare Kernzentrierungseinrichtung ist zwischen Kerneinheit und Kernhalteplatte angeordnet ist.

Die justierbare Kernzentrierungseinrichtung ist dadurch in Schliessrichtung hinter den Abstreifring zwischen Kernhalteplatte und Kerneinheit angeordnet und kann so in Bezug auf eine zentrale, parallel zur Schliessrichtung durch den Kern verlaufende Achse (Kernachse) näher am Kern positioniert werden. Dies wiederum erlaubt eine Verringerung des Gesamtdurchmesser der Kerneinheiten und die einzelnen Kavitäten eines Mehrkavitäten-Spritzgusswerkzeugs können näher zueinander angeordnet sein. Indem der Abstreifring schwimmend in der Abstreifplatte gehalten ist, passt er sich an eine Verschiebung der Kerneinheit zur Feinzentrierung des Kerns in der Matrize an. In anderen Worten wird die Kerneinheit resp. der Kern von hinten mittels der Kernhalteplatte zentriert, im Unterschied zum Stand der Technik, wo die Kerneinheit vorne mittels der Matrizenhalteplatte zentriert wird.

Mit justierbarer Kernzentrierungseinrichtung ist im Kontext dieser Erfindung eine Kernzentrierungseinrichtung gemeint, mittels welcher die Position des Kern in einer Trennebene verschoben und relativ zur Matrize zentriert werden kann, um eine Kavität mit gleichmässigen Wandstärken zu erhalten. Im Gegensatz ist mit dem Begriff fixe Plattenzentrierungseinheit eine Einrichtung gemeint, mit welcher die Lage der verschiedenen Platten des Spritzgusswerkzeugs im geschlossenen Zustand zueinander in der Trennebene verschiebungsfrei festgelegt wird. Ein Justierung der Plattenzentrierungseinheit ist nicht vorgesehen resp. nicht möglich. Die fixe Plattenzentrierungseinheit dient zur fixen Ausrichtung und Positionierung der einzelnen Platten zueinander. Die justierbare Kernzentrierungseinrichtung dient zur Feinjustierung des Kerns innerhalb der Matrize. Mit Schliessrichtung ist die Richtung gemeint, in der der Kern beim Schliessen des Werkzeugs relativ zur Matrize hin geschoben wird. Vorne ist demnach durch den vorderen engeren Bereich des Kern definiert.

Zum Öffnen des Spritzgusswerkzeugs wird erst die Matrizenhalteplatte mit der mindestens einen Matrize entlang einer ersten Trennlinie zwischen Matrizenhalteplatte und Abstreifplatte von der Abstreifplatte zusammen mit der Kernhalteplatte mit der mindestens einen Kerneinheit getrennt. Anschliessend wird das Spritzgusserzeugnis vom Kern abgestreift, indem die Abstreifplatte mit dem Abstreifring entlang einer zweiten Trennlinie zwischen Abstreifplatte und Kernhalteplatte getrennt und vorgeschoben wird.

Im geschlossenen Zustand erstreckt sich die Kerneinheit resp. der Kern durch den Abstreifring resp. die Abstreifplatte hindurch bis in die Matrize hinein und bildet zusammen mit der Matrize die Kavität. Die Kavität wird zudem in einem kleinen den Kern umlaufenden Bereich durch den Abstreifring ausgebildet. Die Injektionsdüse resp. der Anspritzbereich kann vorne, hinten oder seitlich angeordnet sein.

In einigen Ausführungsformen kann mindestens eine erste fixe Plattenzentrierungseinheit zwischen Matrizenhalteplatte und Abstreifplatte und mindestens eine zweite fixe Plattenzentrierungseinheit zwischen Abstreifplatte und Kernhalteplatte angeordnet sein, wobei die erste und zweite fixe Plattenzentrierungseinheit eine fixe, vorbestimmte Positionierung der Matrizenhalteplatte, Abstreifplatte und Kernhalteplatte zueinander im geschlossenen Zustand des Spritzgusswerkzeugs definieren. Matrizenhalteplatte, Abstreifplatte und Kernhalteplatte sind so in der Trennebene starr zueinander fixiert und Position des Kerns in der Matrize wird dann mittels der justierbaren Kernzentrierungseinrichtung feinjustiert.

In einigen Ausführungsform ist entlang einer peripheren Aussenfläche des Abstreifrings ein Luftspalt vorhanden ist. Auf diese Weise ist der Abstreifring in einer Trenneben beweglich gelagert, um eine Verschiebung der Kerneinheit zur Zentrierung des Kerns zu erlauben.

In einigen Ausführungsformen kann die mindestens eine justierbare Kernzentrierungseinrichtung Abstreifplattenseitig in der Kernhalteplatte angeordnet sein. Bei einer Abstreifplattenseitigen Anordnung ist die Kernzentrierungseinrichtung bei vollständig geöffnetem Spritzgusswerkzeug, d.h. wenn bei der Wartung die Abstreifplatte vollständig in Richtung Matrizenhalteplatte vorgeschoben ist, für eine erneute oder korrigierende Feinzentrierung des Kerns zugänglich, ohne dass das Spritzgusswerkzeug teilweise auseinandergebaut werden muss.

In einigen Ausführungsformen kann der Abstreifring mit mindestens einem Befestigungselement schwimmend in der Abstreifplatte gehalten sein. Das Befestigungselement kann gleichzeitig die erste fixe Plattenzentrierungseinheit zwischen Matrizenhalteplatte und Abstreifplatte ausbilden. Das Befestigungselement kann alternativ zwei parallele zueinander und parallel zur Trennebene angeordnete Sicherungsstifte umfassen, welche den Abstreifring an zwei sich gegenüberliegenden Seiten direkt in der Abstreifplatte oder indirekt z.B. über die erste fixe Plattenzentrierungseinheit in der Abstreifplatte sichern. Die Sicherungsstifte haben genügend Spiel, so dass der Abstreifring schwimmend in der Abstreifplatte gelagert ist.

In einigen Ausführungsformen kann der Abstreifring eine zu einem konischen Dichtungsbereich, d.h. eine konische Aussenfläche der Kerneinheit komplementäre konische Innenfläche aufweist. Abstreifring und Kerneinheit sind dabei derart ausgebildet, dass beim Schliessen des Spritzgusswerkzeugs der Abstreifring durch die Matrizeneinheit in Schliessrichtung nach hinten geschoben und so dichtend gegen die Kerneinheit gepresst wird. Um dies zu erreichen kann der Abstreifring mit seiner konischen Innenfläche eine Vorspannung gegenüber der konischen Aussenfläche der Kerneinheit aufweisen, so dass er beim Schliessen des Spritzgusswerkzeugs mit der konischen Innenfläche dichtend gegen die konische Aussenfläche der Kerneinheit gepresst wird. In anderen Worten kann der Abstreifring vorne ein geringes Übermass aufweisen, so dass er im geschlossen Zustand des Spritzgusswerkzeugs durch die Matrizeneinheit nach hinten geschoben ist und dabei dichtend gegen die konische Dichtfläche der Kerneinheit gepresst ist. Die Kavität, welche im hinteren Bereich teilweise durch den Abstreifring begrenzt ist, ist dann dichtend geschlossen. In der Regel ist - auch im geschlossen Zustand des Spritzgusswerkzeugs - zwischen Abstreifring und Abstreifplatte und zwischen dem in Schliessrichtung hinteren Ende des Abstreifrings und der Kernhalteplatte, der Kerneinheit oder der justierbaren Kernzentrierungseinrichtung eine Luftspalt vorhanden. Wird der Abstreifring bei geschlossenem Werkzeug bis auf Null gegen die Kernhalteplatte resp. Kerneinheit gepresst (d.h. es ist kein Luftspalt mehr vorhanden), dann kann der Abstreifring 6 die Lage des Kerns noch zusätzlich stabilisieren.

In einigen Ausführungsformen kann die mindestens eine Kernzentrierungseinrichtung vier gleichmässig um die Kerneinheit angeordnete Zentrierleisten mit geneigter Zentrierfläche aufweisen.

In einigen Ausführungsformen kann der Abstreifring aussenseitig einen umlaufenden Anschlag aufweisen, so dass er zum Abstreifen des Spritzgusserzeugnisses vom Kern durch die nach vorne verschiebbare Abstreifplatte mitgenommen wird. Das Befestigungselement für den Abstreifring kann ebenfalls an diesem umlaufenden Anschlag angreifen.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: eine Schnittdarstellung eines Spritzgusswerkzeugs gemäss Stand der Technik mit einer Kernzentrierungseinrichtung zwischen Kerneinheit und Matrizeneinheit;
- Fig. 2: eine Schnittdarstellung eines Spritzgusswerkzeug mit einer kernseitigen Kernzentrierungseinrichtung und einem schwimmendem Abstreifring;
- Fig. 3: Eine Draufsicht auf eine Kernzentrierungseinrichtung; und
- Fig. 4: eine Schnittdarstellung eines Spritzgusswerkzeug mit einer kernseitigen Kernzentrierungseinrichtung und einem schwimmendem Abstreifring.

### Wege zur Ausführung der Erfindung

Fig. 1 zeigt eine Schnittdarstellung eines Spritzgusswerkzeugs gemäss dem Stand der Technik. Das Spritzgusswerkzeug umfasst eine Matrizenhalteplatte 2 (nur angedeutet) mit mindestens einer Matrizeneinheit 3, welche die kavitätsbildende Matrize 3' ausbildet, eine Kernhalteplatte 4 (nur angedeutet), mit mindestens einer Kerneinheit 5, welche den kavitätsbildenden Kern 5' ausbildet, und einen Abstreifring 6. Der Abstreifring 6 ist formschlüssig in einer Aussparung zwischen einem kernbildenden Bereich und einem peripheren Bereich der Kerneinheit angeordnet, so dass zum Auswerfen des Spritzgusserzeugnisses mittels einer Betätigungseinrichtung 8 entlang dem Kern 5' nach vorne vorgeschoben werden kann. Die Kerneinheit 5 ist schwimmend auf der Kernhalteplatte 4 gelagert und kann nach erfolgter Zentrierung fixiert werden. Zur Feinzentrierung des Kerns 5' innerhalb der Matrize 3' ist eine justierbare Kernzentrierungseinrichtung 7 zwischen dem peripheren Bereich der Kerneinheit 5 und einem peripheren Bereich der Matrizeneinheit 3 angeordnet.

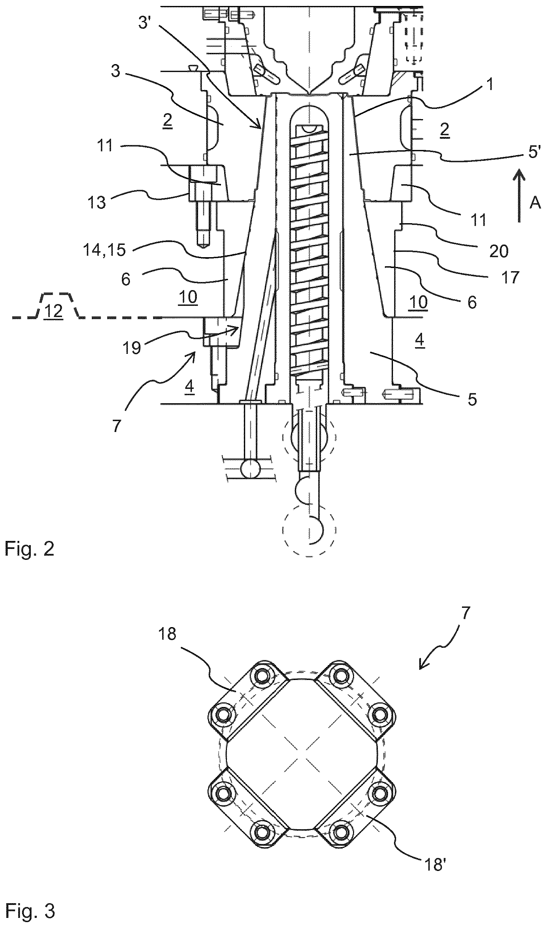

Fig. 2 zeigt eine Schnittdarstellung eines Spritzgusswerkzeug mit einer kernseitigen Kernzentrierungseinrichtung 7 und einem schwimmendem Abstreifring 11. Das Spritzgusswerkzeug umfasst eine Matrizenhalteplatte 2, eine Kernhalteplatte 4 und eine Abstreifplatte 10. Die Matrizenhalteplatte 2 hält mindestens eine Matrizeneinheit 3 mit einer kavitätsbildenden Matrize 3'. Die Kernhalteplatte 4 hält mindestens eine Kerneinheit 5 mit einem kavitätsbildenden Kern 5'. In der Abstreifplatte 10 ist ein Abstreifring 6 schwimmend gelagert. Im geschlossenen Zustand des Werkzeugs bilden jeweils ein Kern 5' und eine Matrize 3' eine Kavität 1 aus, welche zudem im hinteren Bereich durch den Abstreifring 6 begrenzt wird. Dabei reichen Teile der Kerneinheit 5 resp. der Kern 5' durch den Abstreifring 6 in die Matrize 3' hinein.

Die justierbare Kernzentrierungseinrichtung 7 weist beim gezeigten Spritzgusswerkzeug mehrere, vorzugsweise vier gleichmässig um die Kerneinheit 5 angeordnete Zentrierleiste 18 auf (Fig. 3). Die Zentrierleiste 18 weisen eine geneigte Zentrierfläche 19 auf, welche jeweils zu einer geneigten Zentrierfläche an der Kerneinheit 5 komplementär ist. Die Zentrierleiste 18 sind fest mit der Kernhalteplatte 4 verschraubbar. Zur Feinzentrierung werden dann jeweils hinter gegenüberliegenden Zentrierleisten 18, 18' Justierfolien eingefügt resp. entfernt, bis die gewünschte Zentrierung des Kerns 5' erreicht ist.

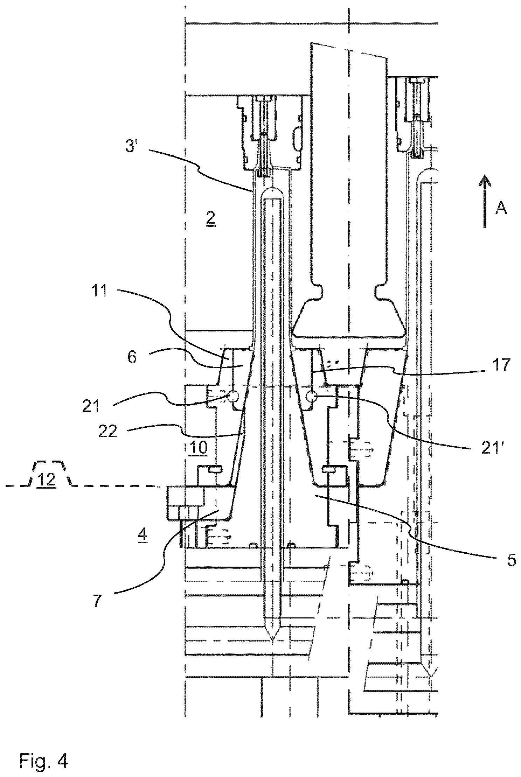

Zwischen der Matrizenhalteplatte 2 und der Abstreifplatte 10 ist mindestens eine erste fixe Plattenzentrierungseinheit 11 angeordnet, welche eine vorbestimmte Ausrichtung der beiden Platten im geschlossenen Zustand des Werkzeugs bestimmt. Zwischen der Abstreifplatte 10 und der Kernhalteplatte 4 ist eine zweite fixe Plattenzentrierungseinheit 12 angeordnet, welche eine vorbestimmte Ausrichtung der beiden Platten im geschlossenen Zustand des Werkzeugs bestimmt (in Fig. 2 und 4 strich-liniert angedeutet). Im geschlossenen Zustand des Werkzeugs ist daher die relative Lage der Matrizenhalteplatte 2, der Abstreifplatte 10 und der Kernhalteplatte 4 zueinander festgelegt. Die eigentliche Feinzentrierung des Kern 5' innerhalb der Matrize 3' erfolgt über die justierbare Kernzentrierungseinrichtung 7. Die fixen Plattenzentriereinrichtungen 11, 12 weisen ebenfalls geneigte Zentrierflächen auf, welche jeweils zwischen den einzelnen Platten 2, 4, 10 komplementär sind.

Beim in Fig. 2 gezeigten Spritzgusswerkzeug weist der Abstreifring 6 im vorderen Bereich einen peripheren umlaufenden Anschlag 20 auf resp. Flansch auf. Der Anschlag 20 greift einerseits in eine Schulter in der Abstreifplatte 10 ein, so dass der Abstreifring 7 zum Abstreifen eines Spritzgusserzeugnisses durch vorschieben der Abstreifplatte 10 entlang des Kerns 5' nach vorne mitgenommen wird, und andererseits mittels eines Befestigungselements 13 schwimmend in der Abstreifplatte 10 gehalten ist. Das Befestigungselement 13 bildet gleichzeitig die erste fixe Plattenzentrierungseinheit 11.

Die Kerneinheit 5 weist anschliessend an den Kern 5' einen konische Aussenfläche 14 auf, welche mit einer konischen Innenfläche des Abstreifrings 6 komplementär ist. Der Abstreifring 6 weist mit seiner konischen Innenfläche eine Vorspannung gegenüber der konische Aussenfläche 15 der Kerneinheit auf (d.h. er ist nach vorn mit einem leichten Übermass ausgestaltet), so dass er beim Schliessen des Werkzeugs durch die Matrizeneinheit 3' mit der konischen Innenfläche 15 gegen die konischen Aussenfläche 14 der Kerneinheit 5 gepresst wird. Entlang einer peripheren Aussenfläche des Abstreifrings, d.h. zwischen Abstreifring 6 und Abstreifplatte 10 ist ein geringer Luftspalt 17 vorhanden. Zwischen dem hinteren Bereich des Abstreifrings 6 und der Kernhalteplatte 4 resp. der Kernzentrierungseinrichtung 7 oder der Kerneinheit 5 ist im offenen Zustand des Werkzeugs ein Luftspalt vorhanden, welcher im geschlossenen Zustand zwar kleiner aber auch noch vorhanden sein kann. Wird der Abstreifring 6 bei geschlossenem Werkzeug bis auf Null gegen die Kernhalteplatte 4 resp. Kerneinheit 5 gepresst (d.h. es ist kein Luftspalt mehr vorhanden), dann kann der Abstreifring 6 die Lage des Kerns 5' noch zusätzlich stabilisieren.

Fig. 4 zeigt ebenfalls eine Schnittdarstellung eines Spritzgusswerkzeug mit einer kernseitigen Kernzentrierungseinrichtung 7 und einem schwimmendem Abstreifring 11. Im Unterschied zum Spritzgusswerkzeug aus Fig. 2 ist der Abstreifring 11 mittels zwei parallel zueinander und zur Trennebene des Werkzeugs angeordnete Sicherungsstifte 21, 21' in der Abstreifplatte 10 gehalten. Die Sicherungsstifte 21, 21' haben genügend Spiel, um die schwimmende Lagerung des Abstreifrings zu gewährleisten, aber verhindern ein Herausfallen des schwimmend gelagerten Abstreifrings nach dem Abstreifen eines Spritzgusserzeugnisses vom Kern. In der gezeigten Ausführungsform sind die Sicherungsstifte 21, 21' in der ersten fixen Plattenzentrierungseinheit 11 gehalten, welche wiederum an der Abstreifplatte 10 befestigt ist. Eine direkte Lagerung in der Abstreifplatte 10 ist auch möglich. Die Sicherungsstifte 21, 21' sicher den Abstreifring 6 auch gegen eine Verdrehung.

Entlang der peripheren Aussenfläche der Kerneinheit, d.h. zwischen der Kerneinheit 5 und der fixen Plattenzentrierungseinheit 11 ist ein umlaufender Luftspalt 22 vorhanden, um eine Bewegung der Kerneinheit 5 zur Zentrierung des Kerns 5' zuzulassen.

### Bezeichnungsliste

- 1: Kavität
- 2: Matrizenhalteplatte
- 3, 3': Matrizeneinheit/Matrize
- 4: Kernhalteplatte
- 5, 5': Kerneinheit/Kern
- 6: Abstreifring
- 7: justierbare Kernzentrierungseinrichtung
- 8: Betätigungseinrichtung
- 10: Abstreifplatte
- 11: erste fixe Plattenzentrierungseinheit
- 12: zweite fixe Plattenzentrierungseinheit
- 13: Befestigungselement
- 14: konische Aussenfläche
- 15: konische Innenfläche
- 16: hinteres Ende des Abstreifrings
- 17: Luftspalt
- 18: Zentrierleiste
- 19: geneigte Zentrierfläche
- 20: Anschlag
- 21, 21': Sicherungsstift
- 22: Luftspalt
- A: Schliessrichtung

## Patentansprüche

1. Spritzgusswerkzeug mit mindestens einer Kavität (1) zur Herstellung von dünnwandigen, behälterartigen Spritzgusserzeugnissen, insbesondere Becher, Tuben, Tubenköpfe, Röhrchen, Flaschenrohlingen oder Spritzen, umfassend eine Matrizenhalteplatte (2), welche mindestens eine kavitätsbildende Matrize (3') aufweist; eine Kernhalteplatte (4), welche mindestens eine Kerneinheit (5) mit kavitätsbildendem Kern (5') aufweist; mindestens einen Abstreifring (6) zum Abstreifen des Spritzgusserzeugnisses vom mindestens einen Kern (5'), wobei der mindestens eine Abstreifring (6) zwischen Kernhalteplatte (4) und Matrizenhalteplatte (2) angeordnet ist; und mindestens eine justierbare Kernzentrierungseinrichtung (7) zur Feinausrichtung des mindestens einen Kerns (5') in der mindestens einen Matrize (3'); **dadurch gekennzeichnet, dass** der Abstreifring (6) schwimmend in einer Abstreifplatte (10) gehalten ist, welche zwischen Matrizenhalteplatte (2) und Kernhalteplatte (4) angeordnet ist; und dass die mindestens eine justierbare Kernzentrierungseinrichtung (7) zwischen Kerneinheit (5) und Kernhalteplatte (4) angeordnet ist.

2. Spritzgusswerkzeug nach Anspruch 1, **dadurch gekennzeichnet, dass** mindestens eine erste fixe Plattenzentrierungseinheit (11) zwischen Matrizenhalteplatte (2) und Abstreifplatte (10) und mindestens eine zweite fixe Plattenzentrierungseinheit (12) zwischen Abstreifplatte (10) und Kernhalteplatte (4) angeordnet ist, wobei die erste und zweite fixe Plattenzentrierungseinheit (11, 12) im geschlossenen Zustand des Spritzgusswerkzeugs eine vorbestimmte Positionierung der Matrizenhalteplatte (2), Abstreifplatte (10) und Kernhalteplatte (4) zueinander definieren.

3. Spritzgusswerkzeug nach einem der vorangehenden Ansprüche, **dadurch gekennzeichnet, dass** entlang einer peripheren Aussenfläche des Abstreifrings (6) ein Luftspalt vorhanden ist.

4. Spritzgusswerkzeug nach einem der vorangehenden Ansprüche, **dadurch gekennzeichnet, dass** die mindestens eine justierbare Kernzentrierungseinrichtung (7) Abstreifplattenseitig in der Kernhalteplatte (4) angeordnet ist.

5. Spritzgusswerkzeug nach einem der vorangehenden Ansprüche, **dadurch gekennzeichnet, dass** der Abstreifring (6) mit mindestens einem Befestigungselement (13) schwimmend in der Abstreifplatte (10) gehalten ist.

6. Spritzgusswerkzeug nach Anspruch 5, **dadurch gekennzeichnet, dass** das Befestigungselement (13) gleichzeitig die erste fixe Plattenzentrierungseinheit (11) zwischen Matrizenhalteplatte (2) und Abstreifplatte (10) ausbildet.

7. Spritzgusswerkzeug nach Anspruch 5, **dadurch gekennzeichnet, dass** das Befestigungselement (13) zwei parallel angeordnete Sicherungsstifte (21, 21') umfasst, welche den Abstreifring (6) in der Abstreifplatte (10) schwimmend halten.

8. Spritzgusswerkzeug nach einem der vorangehenden Ansprüche, **dadurch gekennzeichnet, dass** der Abstreifring (6) eine zu einer konischen Aussenfläche (14) der Kerneinheit (5) komplementäre konischen Innenfläche (15) aufweist.

9. Spritzgusswerkzeug nach Anspruch 6, **dadurch gekennzeichnet, dass** der Abstreifring (6) mit seiner konischen Innenfläche eine Vorspannung gegenüber der konischen Aussenfläche (15) der Kerneinheit aufweist, so dass er beim Schliessen des Spritzgusswerkzeugs mit der konischen Innenfläche dichtend gegen die konische Aussenfläche der Kerneinheit gepresst wird.

10. Spritzgusswerkzeug nach einem der vorangehenden Ansprüche, **dadurch gekennzeichnet, dass** die mindestens eine Kernzentrierungseinrichtung (7) vier gleichmässig um die Kerneinheit (5) angeordnete Zentrierleisten (18) mit geneigter Zentrierfläche (19) aufweist.

11. Spritzgusswerkzeug nach einem der vorangehenden Ansprüche, **dadurch gekennzeichnet, dass** der Abstreifring (6) aussenseitig einen umlaufenden Anschlag (20) aufweist, so dass er zum Abstreifen des Spritzgusserzeugnisses vom Kern (5') durch die nach vorne verschiebbare Abstreifplatte (10) mitgenommen wird.

## Claims

1. An injection moulding tool having at least one cavity (1) for producing thin-walled, container-like injection-moulded articles, particularly cups, tubes, tube heads, small tubes, bottle blanks or syringes, comprising a die holding plate (2), which has at least one cavity-forming die (3'); a core-holding plate (4), which has at least one core unit (5) with cavity-forming core (5'); at least one stripping ring (6) for stripping the injection-moulded article from at least one core (5'), wherein the at least one stripping ring (6) is arranged between core-holding plate (4) and die holding plate (2); and at least one adjustable core-centring device (7) for the fine alignment of the at least one core (5') in the at least one die (3'), **characterized in that** the stripping ring (6) is held in a floating manner in a stripping plate (10), which is arranged between die holding plate (2) and core-holding plate (4); and **in that** the at least one adjustable core-centring device (7) is arranged between core unit (5) and core-holding plate (4).

2. The injection moulding tool according to Claim 1, **characterized in that** at least one first fixed plate centring unit (11) is arranged between die holding plate (2) and stripping plate (10) and at least one second fixed plate centring unit (12) is arranged between stripping plate (10) and core-holding plate (4), wherein the first and second fixed plate centring units (11, 12) define a predetermined positioning of the die holding plate (2), stripping plate (10) and core-holding plate (4) with respect to one another in the closed state of the injection moulding tool.

3. The injection moulding tool according to one of the preceding claims, **characterized in that** an air gap is present along a peripheral outer surface of the stripping ring (6).

4. The injection moulding tool according to one of the preceding claims, **characterized in that** the at least one adjustable core-centring device (7) is arranged on the stripping plate side in the core-holding plate (4) .

5. The injection moulding tool according to one of the preceding claims, **characterized in that** the stripping ring (6) is held in the stripping plate (10) in a floating manner using at least one fastening element (13) .

6. The injection moulding tool according to Claim 5, **characterized in that** the fastening element (13) forms the first fixed plate centring unit (11) between die holding plate (2) and stripping plate (10) at the same time.

7. The injection moulding tool according to Claim 5, **characterized in that** the fastening element (13) has two parallel arranged securing pins (21, 21'), which hold the stripping ring (6) in the stripping plate (10) in a floating manner.

8. The injection moulding tool according to one of the preceding claims, **characterized in that** the stripping ring (6) has a conical inner surface (15) complementary to a conical outer surface (14) of the core unit (5).

9. The injection moulding tool according to Claim 6, **characterized in that** the stripping ring (6) with its conical inner surface has a prestress compared to the conical outer surface (15) of the core unit, so that it is pressed by way of the conical inner surface in a sealing manner against the conical outer surface of the core unit during the closing of the injection moulding tool.

10. The injection moulding tool according to one of the preceding claims, **characterized in that** the at least one core-centring device (7) has four centring strips (18) with inclined centring surface (19) arranged evenly around the core unit (5).

11. The injection moulding tool according to one of the preceding claims, **characterized in that** the stripping ring (6) has a surrounding stop (20) on the outer side, so that it is entrained by the forward displaceable stripping plate (10) to strip the injection-moulded article from the core (5').

## Revendications

1. Moule d'injection comportant au moins une cavité (1) pour la production de produits d'injection de type contenants à paroi mince, en particulier des godets, des tubes, des têtes de tubes, des petits tuyaux, des ébauches de bouteilles ou des seringues, comprenant une plaque support de matrice (2) qui présente au moins une matrice (3') formant une cavité ; une plaque support de noyau (4) qui présente au moins une unité de noyau (5) dotée d'un noyau (5') formant une cavité ; au moins un joint racleur (6) destiné à racler le produit d'injection d'au moins un noyau (5'), l'au moins un racleur (6) étant disposé entre la plaque support de noyau (4) et la plaque support de matrice (2) ; et au moins un dispositif de centrage de noyau ajustable (7) pour l'orientation de précision de l'au moins un noyau (5') dans l'au moins une matrice (3') ; **caractérisé en ce que** le joint racleur (6) est maintenu de manière flottante dans une plaque de raclage (10) qui est disposée entre la plaque support de matrice (2) et la plaque support de noyau (4) ; et que l'au moins un dispositif de centrage de noyau ajustable (7) est disposé entre l'unité de noyau (5) et la plaque support de noyau (4).

2. Moule d'injection selon la revendication 1, caractérisé en ce une première unité de centrage de plaque fixe (11) est disposée entre la plaque support de matrice (2) et la plaque de raclage (10) et au moins une seconde unité de centrage de plaque fixe (12) entre la plaque de raclage (10) et la plaque support de noyau (4), les première et seconde unités de centrage de plaque fixe (11,12) définissant l'une par rapport à l'autre, à l'état fermé du moule d'injection, un positionnement prédéfini de la plaque support de matrice (2), de la plaque de raclage (10) et de la plaque support de noyau (4).

3. Moule d'injection selon une des revendications précédentes, **caractérisé en ce qu'**un interstice d'air est présent le long d'une surface extérieure périphérique du joint racleur (6).

4. Moule d'injection selon une des revendications précédentes, **caractérisé en ce que** l'au moins un dispositif de centrage de noyau ajustable (7) est disposé du côté de la plaque de raclage dans la plaque support de noyau (4).

5. Moule d'injection selon une des revendications précédentes, **caractérisé en ce que** le joint racleur (6) est maintenu par au moins un élément de fixation (13) de manière flottante dans la plaque de raclage (10) .

6. Moule d'injection selon la revendication 5, **caractérisé en ce que** l'élément de fixation (13) constitue en même temps la première unité de centrage de plaque fixe (11) entre la plaque support de matrice (2) et la plaque de raclage (10).

7. Moule d'injection selon la revendication 5, **caractérisé en ce que** l'élément de fixation (13) comprend deux tiges de blocage disposées parallèlement (21,21') qui maintiennent le joint racleur (6) dans la plaque de raclage (10).

8. Moule d'injection selon une des revendications précédentes, **caractérisé en ce que** le joint racleur (6) présente une surface intérieure conique (15) complémentaire d'une surface extérieure conique (14) de l'unité de noyau (5).

9. Moule d'injection selon la revendication 6, **caractérisé en ce que** le joint racleur (6) présente avec sa surface intérieure conique une précontrainte par rapport à la surface extérieure conique (15) de l'unité de noyau de sorte que, lors de la fermeture du moule d'injection, il est comprimé par la surface intérieure conique hermétiquement contre la surface extérieure conique de l'unité de noyau.

10. Moule d'injection selon une des revendications précédentes, **caractérisé en ce que** l'au moins un dispositif de centrage de noyau (7) présente quatre baguettes de centrage (18) disposées régulièrement autour de l'unité de noyau (5) avec une surface de centrage inclinée (19).

11. Moule d'injection selon une des revendications précédentes, **caractérisé en ce que** le joint racleur (6) présente à l'extérieur une butée périphérique (20), de sorte que, pour le raclage du produit d'injection par le noyau (5'), il est entraîné par la plaque de raclage déplaçable vers l'avant (10).
